# EUROPEAN PATENT SPECIFICATION

(11) **EP 2 338 774 B1**
(45) Date of publication and mention of the grant of the patent: **16.05.2012**
(21) Application number: 09180704.0
(22) Date of filing: 23.12.2009
(51) Int. Cl.: B62K 3/00, B62K 5/00

(54) **A swingable and speedable freewheeled vehicle**
Schwenkbares und beschleunigbares freilaufendes Fahrzeug
Véhicule à roue libre pivotant et propulsable

(43) Date of publication of application: 29.06.2011
(73) Proprietor: Chen, Jhe-Wei, Fengshan City, Kaohsiung County 830 (TW); Yang, Min-Hua, Qiaotou Township, Kaohsiung County 825 (TW); Wu, Feng-Rong, Fengshan City, Kaohsiung County 830 (TW)
(72) Inventor: Chen, Jhe-Wei, Fengshan City, Kaohsiung County 830 (TW); Yang, Min-Hua, Qiaotou Township, Kaohsiung County 825 (TW); Wu, Feng-Rong, Fengshan City, Kaohsiung County 830 (TW)
(74) Representative: Chaillot, Geneviève

(56) References cited:
- EP-A1- 1 950 126
- US-A- 4 087 108
- US-A1- 2004 075 230
- US-A1- 2008 179 849

## Description

### BACKGROUND OF THE INVENTION

### 1. Field of the Invention

The present invention relates to a vehicle, particularly to a swingable and speedable freewheeled vehicle.

### 2. Description of the Related Art

Figs. **1** and **2** show "An Improvement on A Freewheeled Vehicle" issued by an R.O.C. Patent No. M322912. The freewheeled vehicle **1** comprises a frame **11,** a fixture **12** pivotally disposed on one end of the frame **11,** a steering stem **13** disposed on the fixture **12,** front and rear wheels **14, 15** respectively installed on the frame **11**. Wherein, the frame **11** includes two holding rods **111** respectively extended from the fixture **12,** and a pedal **112** individually installed on each holding rod **111.** Each of the holding rods **111** has a fork member **113** connected to the rear wheel **14,** and a spindle **114** pivoted on the holding rod **111** and connected to the fork member **113**. Accordingly, when driver steps on the pedals **112** and swings his body for driving the fork member **113** to sway rightward and leftward, the rear wheels **15** would thence rotate to march the freewheeled vehicle **1** forward.

However, problems and difficulties may encounter with the above conventional structures as follows:
1. While marching the freewheeled vehicle **1,** the rear wheels **14** would be accordingly swung. Thus, if drivers want to speed up the vehicle, they have to exert their swinging strength on the rear wheels **14** harder. However, in the same time, drivers would readily lose their balance on the freewheeled vehicle **1** because of the casual or improper strength exertion. As a result, people would raise a safety concern about the conventional freewheeled vehicle **1**. Wherein, drivers could not enjoy their driving due to the unstable balance; therefore, drivers would adversely drop their interests on the freewheeled vehicle **1,** and an exercising effect would be dwindled.
2. When the freewheeled vehicle **1** is not driven, the fork member **113** and the spindle **114** are not structurally constricted. Therefore, if users move the freewheeled vehicle **1** backwards, the fork member **113** easily slants aside in time of moving. Whereby, the rear wheels **15** and the front wheel **14** would not have a consistent running direction, which results in an inconvenient moving manner.

### SUMMARY OF THE INVENTION

The object of the present invention is to provide a swingable and speedable freewheeled vehicle, which could be readily speeded up to promote the fun of using and the effect of exercising.

The swingable and speedable freewheeled vehicle in accordance with the present invention defined in claim 1 comprises a frame, a fixture pivotally disposed on one end of the frame, a steering stem fixed to the fixture, front and rear wheels respectively installed to the frame and the fixture, and swingable devices respectively installed between the frame and the rear wheels. Each swingable device includes a guiding track fixed to a seated member, a spindle pivoted on the seated member, and a sliding assembly for sliding on the guiding track. Thereby, while swingably driving the freewheeled vehicle, a sliding stem of the sliding assembly would slide along the guiding track to perform a high-low displacement. Accordingly, a variation of distance between the ground and the frame would provide the freewheeled vehicle with an inertia force during the sliding. Thus, drivers employ a pushing power from the inertia force to readily and speedily motivate the freewheeled vehicle forwards so as to increase their using interests and exercising effect.

The advantages of the present invention over the known prior arts will become more apparent to those of ordinary skilled in the art upon reading the following descriptions in junction with the accompanying drawings.

### BRIEF DESCRIPTION OF THE DRAWINGS

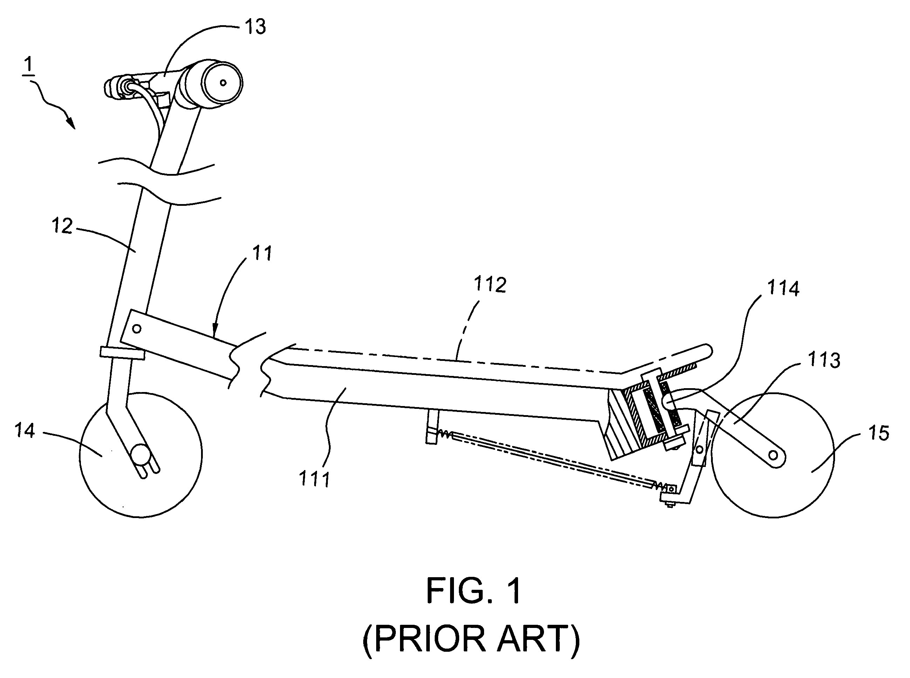

- Fig. **1**: is a schematic view showing the conventional freewheeled vehicle;

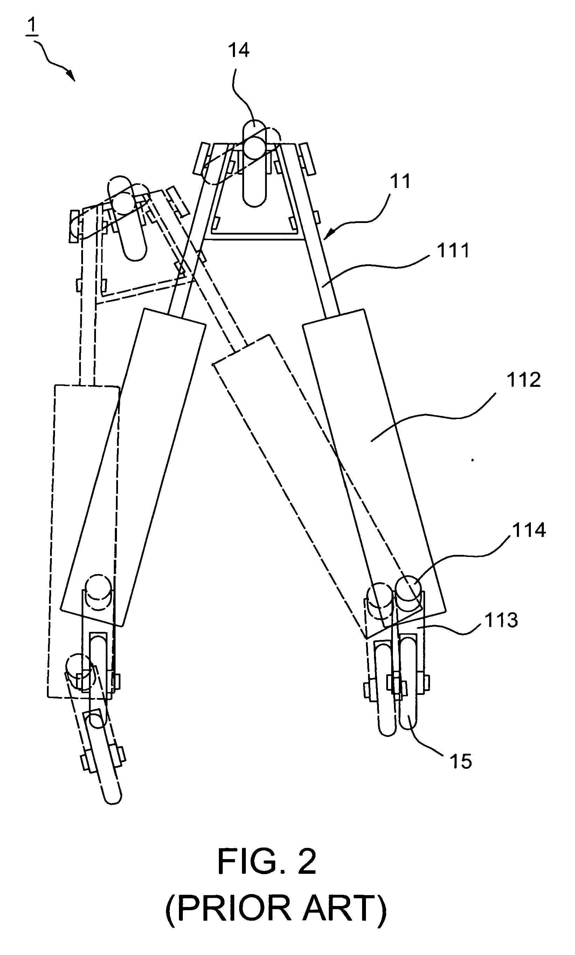

- Fig. **2**: is a schematic view showing Fig. 1 in using;
- Fig. **3**: is a perspective view showing a first preferred embodiment of the present invention;
- Fig. **4**: is an enlarged view of elements in the first embodiment;
- Fig. **5**: is a top view of the elements in the first embodiment;
- Fig. **6**: is a schematic view showing the first embodiment in using;
- Fig. **7**: is a schematic view showing the first embodiment in using;
- Fig. **8**: is a perspective view showing a second preferred embodiment of the present invention; and
- Fig. **9**: is a perspective view showing a third preferred embodiment of the present invention.

### DETAILED DESCRIPTION OF THE PREFERRED EMBODIMENTS

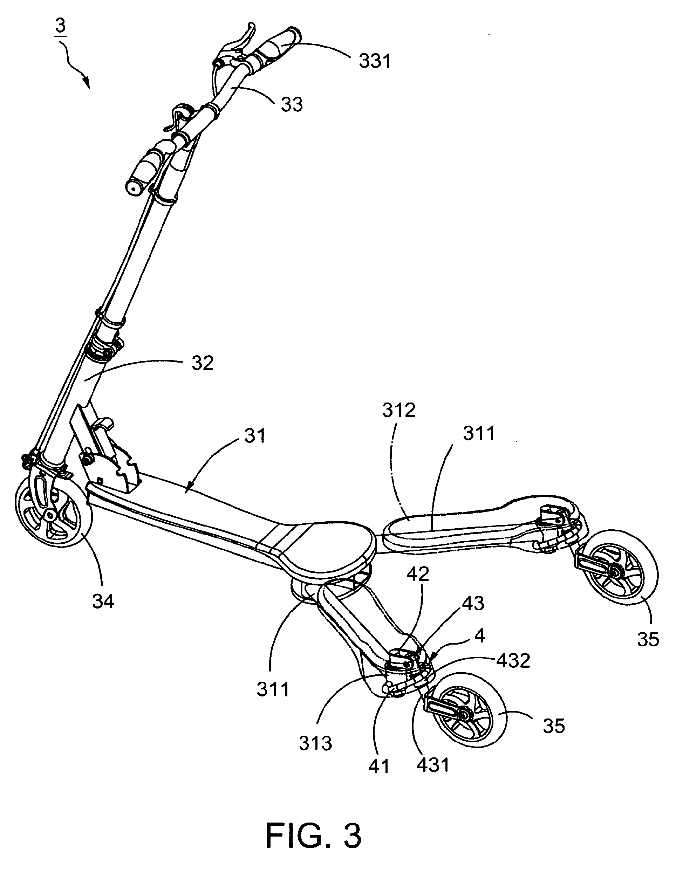

Fig. **3** shows a first preferred embodiment of the present invention, a freewheeled vehicle **3** allowable for readily swinging and speeding up, comprising a frame **31,** a fixture **32** pivotally disposed on one end of the frame **31,** a steering stem **33** fixed to the fixture **32,** front and rear wheels **34, 35** respectively installed on the frame **31** and the fixture **32,** and swingable devices **4** respectively disposed between the frame **31** and the rear wheels **35.** Wherein, the frame **31** has two holding rods **313** respectively extended from the fixture **32,** a seated member **313** fixed to an end of each holding rod **311,** and a pedal **312** installed on each holding rod **311.** In addition, the steering stem **33** forms two handlebars thereon for controlling the marching direction of the front wheel **34.**

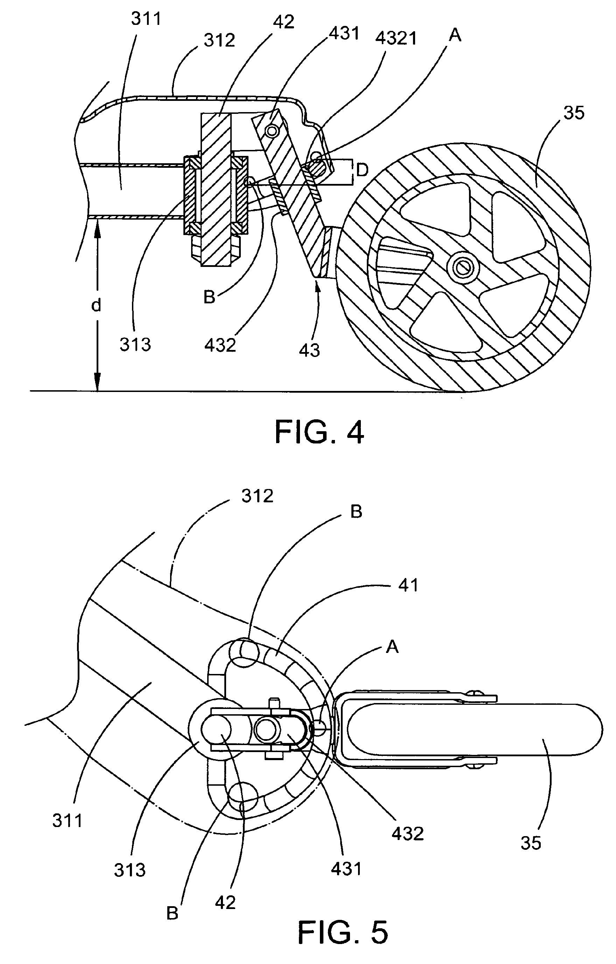

Accompanying with Figs. **3** and **4****,** the swingable device **4** includes a guiding track **41** fixed to the seated member **313,** a spindle **42** pivoted on the seated member **313,** and a sliding assembly **43** for sliding along the guiding track **41.** Substantially, the sliding assembly **43** includes a sliding stem **431** with its one end pivoted on the spindle **42** and with its other end pivoted on the rear wheel **35,** and a rotary member **432** penetrated by the sliding stem **431.** The rotary member **432** props against the guiding track **41** for sliding thereon. Additionally, the guiding track **41** is preferably structured to be inclined with respect to the ground. Herein, the guiding track **41** further has an upmost point **A** defined thereon and two lowest points **B** respectively defined at two sides of the guiding track **41.** Accordingly, while a vertical distance **D** between the upmost point **A** and the lowest points **B** is larger, a greater sliding inertia force and motive force impinging on the sliding assembly **43** would be brought about. Whereby, the freewheeled vehicle **3** would sustain a preferable pushing force. Further, a guiding groove **4321** is preferably defined on the rotary member **432** corresponding to the sliding stem **431,** so that the rotary member **432** could more firmly prop against and slide on the guiding track **41.**

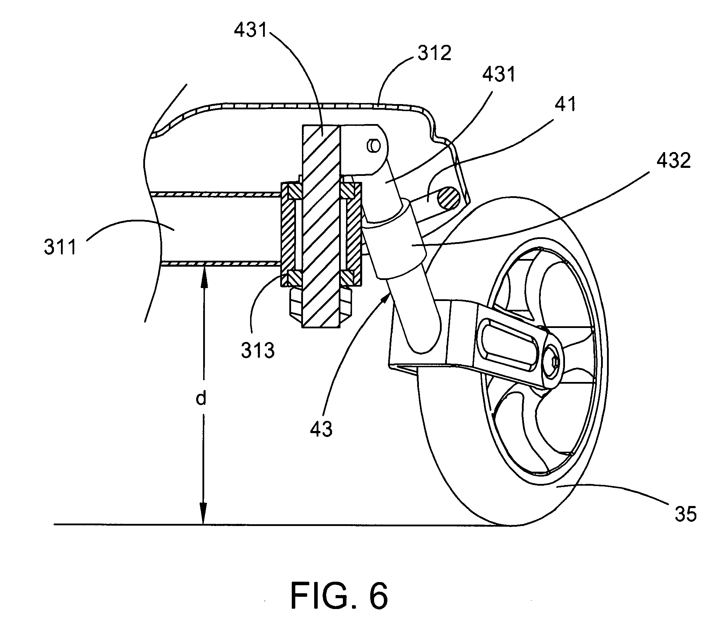

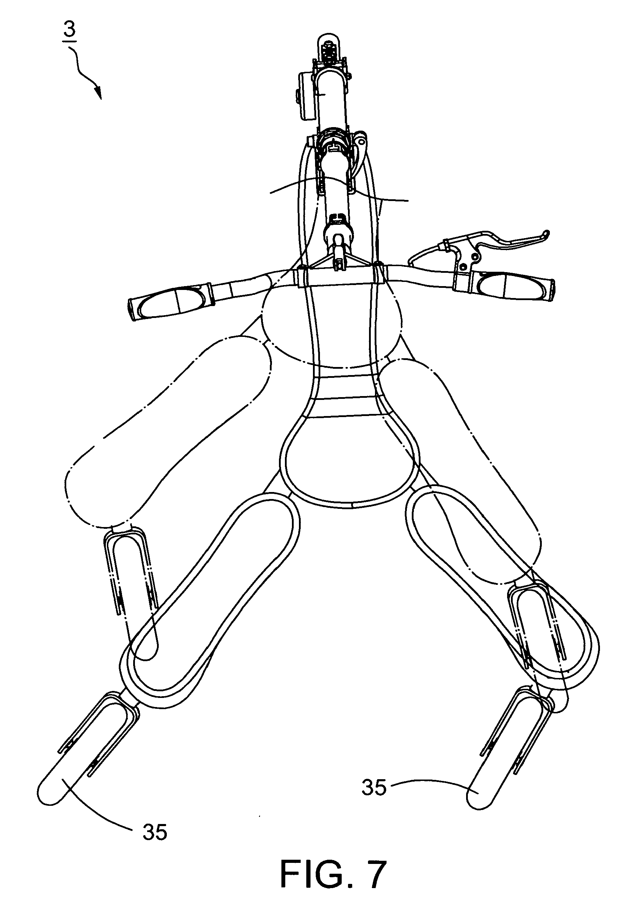

Referring to Figs. **3** and **5****,** while the freewheeled vehicle **3** is placed on the ground, a balance between the weight of the frame **31** and the rear wheels **35** allows the rotary member **432** to justly locate on the upmost point **A** of the guiding track **41.** At the same time, the rear wheels **35** and the front wheel **34** have a coherent placing manner. Accordingly, if drivers tend to move the freewheeled vehicle **3,** the rear wheels **35** would not go aside, which favorably prevents an inconvenient motion. Further referring to Figs. **6** and **7****,** in using, drivers stand on the pedals **312** with their swinging motions to carry the holding rods **311** moving leftwards and rightwards reciprocally. Concurrently, the rotary member **432** would slide forth and backward between the two lowest points **B** on the guiding track **41.** When the rotary member **432** reaches one of the lowest points **B** and the driver keeps swinging, the rotary member **432** would further slide toward the other lowest point **B** for concurrently allowing the rear wheels **35** to sway with a certain angle. Notably, during the swaying of the rear wheels **35,** a torsion would be accordingly generated between the ground and the vehicle. Concomitantly, upon the rotary member **432** slides over the upmost point **A** toward the lowest points **B,** a certain strength is generated for driving the rotary member **432** to move from a higher place to a lower place and accordingly varying the distance **d** between the frame **31** and the ground. Thus, by means of the certain strength providing a pushing force and the rotary member **432** providing a swingably moving force, the freewheeled vehicle **3** could be stably marched.

Still further, in time of swinging, the rotary member **432** would slide from either lowest point **B** toward the upmost point **A** on the guiding track **41.** Concurrently, the holding rods **311** would be accordingly lifted along with the sliding of the sliding stem **431** on the guiding track **41.** Thereby, a distance **d** between the holding rods **311** would be further away from the ground accordingly so as to enhance a moving force thereof. Whereas, when the rotary member **432** slides to the lowest point **B,** the motion of the rotary member **432** would be restricted. Wherein, since the rear wheels **35** and the holding rods **311** still sustain the strength exerted from the driver, the weight of the driver would thence turn into a returning force for sliding the rotary member **432** from the lowest point **B** toward the upmost point **A** on the guiding track **41.** Herein, when the rotary member **432** reaches the upmost point **A** on the guiding track **41,** an inertia force would be accumulated, which leads to the rotary member **432** successively moving along the guiding track **41** toward the other lowest point **B.** Therefore, drivers could employ the inertia force to easily and swiftly carry the freewheeled vehicle **3** frontward, thereby increasing the riding enjoyment and exercising effect. Additionally, the strength exerted by the driver on the vehicle could further reinforce the inertia force of the rotary member **432** sliding on the guiding track **41,** so that the driver employs his strength to cooperate with the swing direction of the vehicle for achieving a speedy movement, and the occurrence of unstable balance during the acceleration would be avoided to promote the using safety.

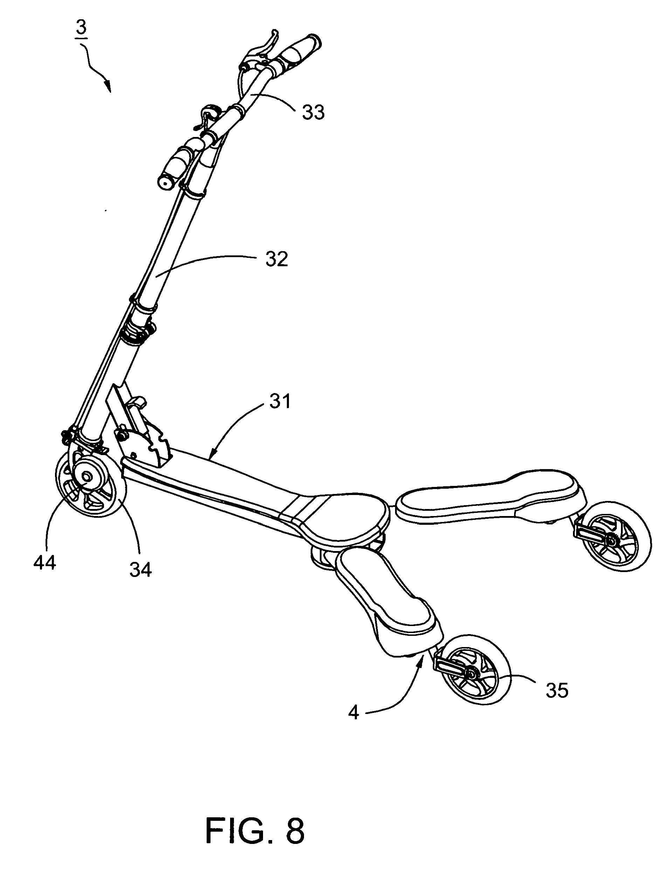

Referring to Fig. **8** shows a second preferred embodiment of the present invention. The freewheeled vehicle **3** still comprises the frame **31,** the fixture **32,** the steering stem **33,** the front and rear wheels **34, 35,** and the swingable devices **4.** Particularly, a power **44** connected to the front wheel **34** is installed on the frame **31** for assisting the automatic rotation of the front wheel **34.** Accordingly, the freewheeled vehicle **3** could be driven forward without self-swinging for promoting the interest in riding the freewheeled vehicle. As it should be, when drivers manually exert their strength to swing the freewheeled vehicle **3** and concurrently drive the same via the power **44,** an easier and speedy riding with amusement could be attained.

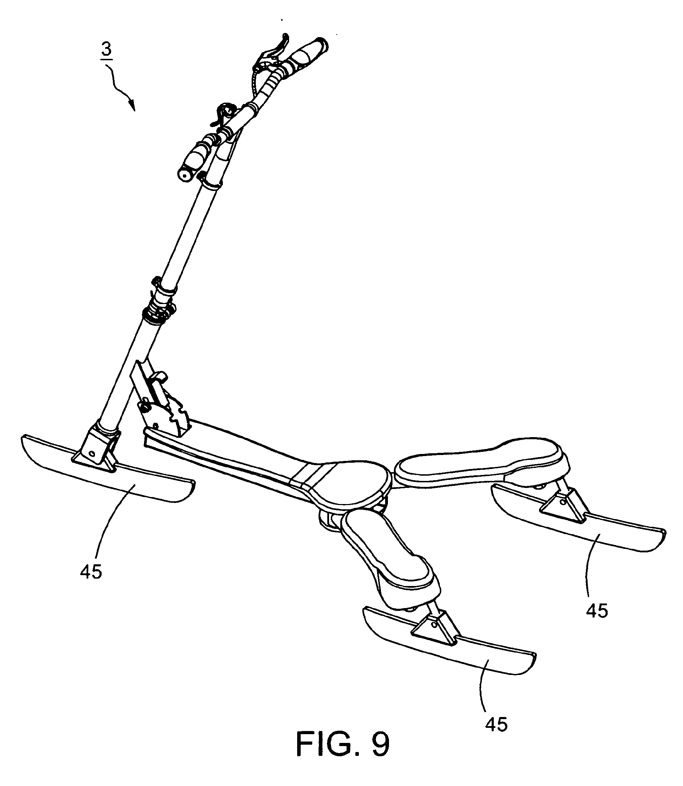

Referring to Fig. **9** shows a third preferred embodiment of the present invention. The similar elements and correlations to those of the first embodiment are herein omitted. Wherein, the front and rear wheels **34, 35** in Fig. **3** could be replaced by ice skates **45.** Thereby, the freewheeled vehicle **3** could be skied on any frozen ground for enjoying ice-skating indoors and outdoors. Therefore, drivers could slide the freewheeled vehicle **3** unlimitedly. Moreover, the using safety, amusement effect and application interests are all preferably promoted.

To sum up, the present invention takes advantage of the swingable devices to generate a suitable inertia force in time of the sliding stem of the sliding assembly moving along the guiding track via drivers stepping and swinging the freewheeled vehicle. Accordingly, drivers utilize the inertia force to perform a high-low displacement of the frame and allow a variation of distance between the frame and the ground, so that the freewheeled vehicle could be readily and swiftly moved forward to increase the using interests and exercising effects. The incident of inclination of the vehicle due to the unstable balance could also be avoided to increase the using safety.

While we have shown and described the embodiment in accordance with the present invention, it should be clear to those skilled in the art that further embodiments may be made without departing from the scope of the present invention defined in the appended claims.

## Claims

1. A swingable and speedable freewheeled vehicle (3) comprising a frame (31), a fixture (32) pivotally disposed on one end of said frame (31), a steering stem (33) disposed on said fixture (32), front and rear wheels (34, 35) respectively fixed to said frame (31) and said fixture (32), and swingable devices (4) respectively installed between said frame (31) and said rear wheels (35); wherein two holding rods (311) are respectively extended from said fixture (32), a seated member (313) being fixed to an end of each holding rod (311), and a pedal being mounted on each of said holding rods (311); two handlebars being formed on said steering stem (33) for controlling a marching direction of said vehicle (3); charaterized in that each of said swingable devices (4) includes a guiding track (41) fixed to said seated member (313), a spindle (42) pivoted on said seated member (313), and a sliding assembly (43) for sliding on said guiding track (41); said guiding track (41) being disposed inclined with respect to the ground ; said sliding assembly (43) having a sliding stem (431) with one end thereof pivoted on said spindle (42) and with the other end thereof pivoted on said rear wheel (35), and a rotary member (432) penetrated by said sliding stem (431); said rotary member (432) propping against said guiding track (41) and sliding thereon.

2. The freewheeled vehicle (3) as claimed in claim 1, wherein a guiding groove (4321) is defined on said rotary member (432) corresponding to said sliding stem (431) for said rotary member (432) to stably prop against said guiding track (41).

3. The freewheeled vehicle (3) as claimed in claim 1, wherein said front and rear wheels (34, 35) are replaced by a set of ice skates (45).

4. The freewheeled vehicle (3) as claimed in claim 1, wherein a power (44) is installed on said front wheel (34) for which to be automatically driven.

5. The freewheeled vehicle (3) as claimed in claim 2, wherein said front and rear wheels (34, 35) are replaced by a set of ice skates (45).

6. The freewheeled vehicle (3) as claimed in claim 2, wherein a power (44) is installed on said front wheel (34) for which to be automatically driven.

## Patentansprüche

1. Schwenkbares und beschleunigbares freilaufendes Fahrzeug (3), umfassend einen Rahmen (31), eine Befestigungsvorrichtung (32), die schwenkbar an einem Ende des Rahmens (31) angeordnet ist, einen Lenkvorbau (33), der an der Befestigungsvorrichtung (32) angeordnet ist, ein Vorderrad und Hinterräder (34, 35), das bzw. die an dem Rahmen (31) beziehungsweise der Befestigungsvorrichtung (32) befestigt ist bzw. sind, und schwenkbare Vorrichtungen (4), die jeweils zwischen dem Rahmen (31) und den Hinterrädern (35) befestigt sind, wobei zwei Haltestangen (311) jeweils von der Befestigungsvorrichtung (32) aus verlaufen, ein Sitzelement (313) an einem Ende jeder Haltestange (311) befestigt ist und eine Pedale an jeder der Haltestangen (311) montiert ist, wobei zwei Griffstangen an dem Lenkvorbau (33) geformt sind, um eine Laufrichtung des Fahrzeugs (3) zu beeinflussen,
**dadurch gekennzeichnet, dass** jede der schwenkbaren Vorrichtungen (4) eine Führungsschiene (41) aufweist, die an dem Sitzelement (313) befestigt ist, eine Welle (42), die an dem Sitzelement (313) schwenkbar ist, und eine Gleitanordnung (43) zum Gleiten an der Führungsschiene (41), wobei die Führungsschiene (41) geneigt zum Boden angeordnet ist, wobei die Gleitanordnung (43) eine Gleitstange (431) aufweist, deren eines Ende an der Welle (42) schwenkbar ist und deren anderes Ende an dem Hinterrad (35) schwenkbar ist, und ein Drehelement (432), durch das die Gleitstange (431) hindurchgeht, wobei sich das Drehelement (432) gegen die Führungsschiene (41) lehnt und daran gleitet.

2. Freilaufendes Fahrzeug (3) nach Anspruch 1, wobei eine Führungsnut (4321) an dem Drehelement (432) definiert ist, die der Gleitstange (431) entspricht, damit sich das Drehelement (432) stabil gegen die Führungsschiene (41) lehnen kann.

3. Freilaufendes Fahrzeug (3) nach Anspruch 1, wobei das Vorderrad und die Hinterräder (34, 35) durch einen Satz Schlittschuhe (45) ersetzt sind.

4. Freilaufendes Fahrzeug (3) nach Anspruch 1, wobei an dem Vorderrad (34) eine Energie (44) angebracht ist, damit es automatisch angetrieben wird.

5. Freilaufendes Fahrzeug (3) nach Anspruch 2, wobei das Vorderrad und die Hinterräder (34, 35) durch einen Satz Schlittschuhe (45) ersetzt sind.

6. Freilaufendes Fahrzeug (3) nach Anspruch 2, wobei an dem Vorderrad (34) eine Energie (44) angebracht ist, damit es automatisch angetrieben wird.

## Revendications

1. Véhicule à roues libres pivotant et propulsable (3) comprenant un châssis (31), un élément de fixation (32) disposé de manière pivotante sur une extrémité dudit châssis (31), une tige de direction (33) disposée sur ledit élément de fixation (32), des roues avant et arrière (34, 35) fixées respectivement audit châssis (31) et audit élément de fixation (32), et des dispositifs pivotants (4) installés respectivement entre ledit châssis (31) et lesdites roues arrière (35) ; deux tiges de support (311) s'étendant respectivement à partir dudit élément de fixation (32), un élément assis (313) étant fixé à une extrémité de chaque tige de support (311), et une pédale étant montée sur chacune desdites tiges de support (311) ; deux poignées étant formées sur ladite tige de direction (33) pour commander une direction de marche dudit véhicule (3) ;
**caractérisé par le fait que** chacun desdits dispositifs pivotants (4) comprend un rail de guidage (41) fixé audit élément assis (313), une broche (42) montée pivotante sur ledit élément assis (313), et un ensemble coulissant (43) destiné à coulisser sur ledit rail de guidage (41) ; ledit rail de guidage (41) étant disposé incliné par rapport au sol ; ledit ensemble coulissant (43) ayant une tige coulissante (431) dont une extrémité est montée pivotante sur ladite broche (42) et dont l'autre extrémité est montée pivotante sur ladite roue arrière (35), et un élément rotatif (432) traversé par ladite tige coulissante (431) ; ledit élément rotatif (432) appuyant contre ledit rail de guidage (41) et coulissant sur celui-ci.

2. Véhicule à roues libres (3) selon la revendication 1, dans lequel une rainure de guidage (4321) est définie sur ledit élément rotatif (432) correspondant à ladite tige coulissante (431) pour que ledit élément rotatif (432) appuie de manière stable contre ledit rail de guidage (41).

3. Véhicule à roues libres (3) selon la revendication 1, dans lequel lesdites roues avant et arrière (34, 35) sont remplacées par un ensemble de patins à glace (45).

4. Véhicule à roues libres (3) selon la revendication 1, dans lequel une source d'énergie (44) est installée sur ladite roue avant (34) pour que celle-ci soit entraînée automatiquement.

5. Véhicule à roues libres (3) selon la revendication 2, dans lequel lesdites roues avant et arrière (34, 35) sont remplacées par un ensemble de patins à glace (45).

6. Véhicule à roues libres (3) selon la revendication 2, dans lequel une source d'énergie (44) est installée sur ladite roue avant (34) pour que celle-ci soit entraînée automatiquement.
